# EUROPEAN PATENT APPLICATION

(11) **EP 4 734 613 A1**
(43) Date of publication of application: **29.04.2026**
(21) Application number: 23942302.3
(22) Date of filing: 20.06.2023
(51) Int. Cl.: H04W 40/02

(54) **NETWORK NODE AND TERMINAL**

(71) Applicant: NTT DOCOMO, INC., Tokyo 100-6150 (JP)
(72) Inventor: MINOKUCHI, Atsushi, Tokyo 100-6150 (JP); SAWADA, Masahiro, Tokyo 100-6150 (JP)
(74) Representative: Hoffmann Eitle
(86) International application number: PCT/JP2023/022767
(87) International publication number: WO 2024/261865

(57) **Abstract**

A network node includes: a control unit configured to configure a first configuration value indicating a number of wireless hops between the network node itself and a first network node that has already been connected to the network node itself; and a reception unit configured to receive a connection request from a terminal or a terminal function included in a second network node via the first network node and to receive an interface establishment request from a lower layer wireless base station function included in a third network node. The control unit stores a value obtained by adding one to the first configuration value in response to reception of the connection request from the terminal function included in the second network node, and configures the stored value as a second configuration value indicating a number of wireless hops between the network node itself and the third network node in a case where both the interface establishment is received from the lower layer wireless base station function included in the third network node and the third network node is determined to be same as the second network node.

## Description

### TECHNICAL FIELD

The present invention relates to a network node and a terminal in a communication system.

### BACKGROUND ART

In 3GPP (registered trademark) (3rd Generation Partnership Project), in order to realize even larger system capacity, even faster data transmission speeds, even lower latency in a wireless communication section, etc., a wireless communication method called "5G" or "NR (New Radio)" is being discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., Non-Patent Literature 1).

In addition, technical specifications of IAB (Integrated Access Backhaul) for using NR as a wireless backhaul under an environment in which a wired backhaul is difficult to be installed are being developed (for example, Non-Patent Literature 2).

### CITATION LIST

### Non-Patent Literature

Non-Patent Literature 1: 3GPP TS 23.501 V18.1.0 (2023-03)
Non-Patent Literature 2: 3GPP TS 38.401 V17.4.0 (2023-03)
Non-Patent Literature 3: 3GPP TS 38.473 V17.4.1 (2023-04)
Non-Patent Literature 4: 3GPP TS 38.331 V17.4.0 (2023-04)

### SUMMARY OF INVENTION

### TECHNICAL PROBLEM

Although a connection involving a plurality of wireless backhauls is available in the current IAB technical specifications, it is necessary to consider minimizing the number of wireless backhauls involved (the number of wireless hops) in order to effectively use the limited wireless resources. However, in the current technical specifications, a route cannot be configured in which the number of wireless hops in the wireless backhaul is taken into account. Here, a route configuration means, for example, to perform cell selection at the time of network connection, IAB topology adaptation, determination of initiating the handover procedure, and determination of moving destination of a terminal.

In view of the above-described points, the present invention has been made to specify a procedure for configuring a route in which the number of wireless hops in the wireless backhaul is taken into account.

### SOLUTION TO PROBLEM

According to the disclosed technique, a network node is provided. The network node includes: a control unit configured to configure a first configuration value indicating a number of wireless hops between the network node itself and a first network node that has already been connected to the network node itself; and a reception unit configured to receive a connection request from a terminal or a terminal function included in a second network node via the first network node and to receive an interface establishment request from a lower layer wireless base station function included in a third network node. The control unit stores a value obtained by adding one to the first configuration value in response to reception of the connection request from the terminal function included in the second network node, and configures the stored value as a second configuration value indicating a number of wireless hops between the network node itself and the third network node in a case where both the interface establishment is received from the lower layer wireless base station function included in the third network node and the third network node is determined to be a same as the second network node.

### ADVANTAGEOUS EFFECTS OF INVENTION

According to the disclosed technique, a procedure for configuring a route in which the number of wireless hops in the wireless backhaul is taken into account can be specified.

### BRIEF DESCRIPTION OF DRAWINGS

[Fig. 1] is a drawing for describing an example of a communication system.
[Fig. 2] is a drawing for describing an example of a communication system under a roaming environment.
[Fig. 3] is a drawing for describing IAB in an embodiment of the present invention.
[Fig. 4] is a drawing illustrating an example of a first sequence diagram in an embodiment of the present invention.
[Fig. 5] is a drawing illustrating an example of a second sequence diagram in an embodiment of the present invention.
[Fig. 6] is a drawing illustrating an example of a third sequence diagram in an embodiment of the present invention.
[Fig. 7] is drawing illustrating an example of a functional structure of a base station 10 and a network node 30 in an embodiment of the present invention.
[Fig. 8] is a drawing illustrating an example of a functional configuration of a terminal 20 in an embodiment of the present invention.
[Fig. 9] is drawing illustrating an example of a hardware structure of a base station 10, a terminal 20, and a network node 30 in an embodiment of the present invention.
[Fig. 10] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional technique may be the conventional LTE or NR, the conventional technique is not limited to the conventional LTE or NR. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 30 or a terminal 20 is configured.

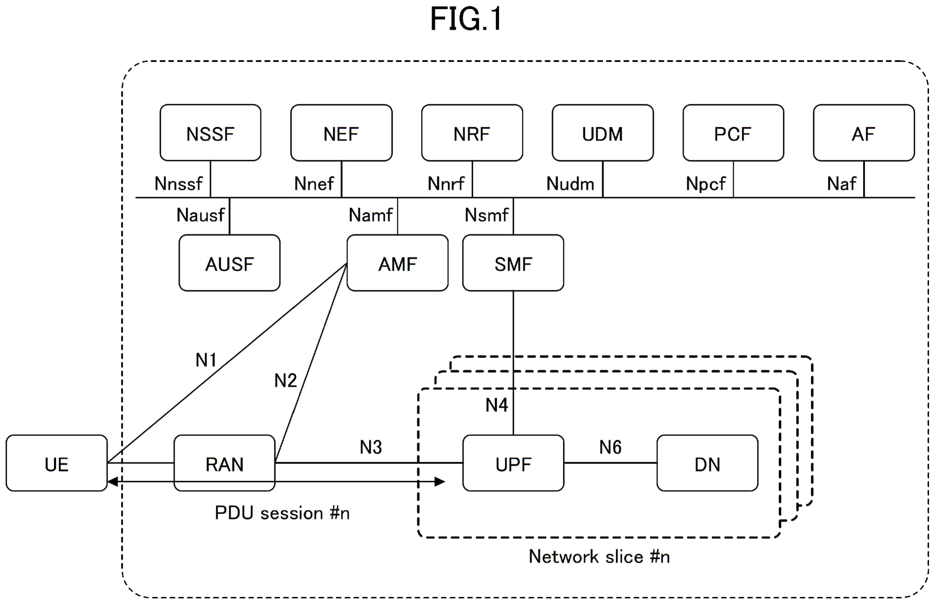

Fig. 1 is a drawing illustrating an example of a communication system. As illustrated in Fig. 1, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function) and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to UDR (User Data Repository) that stores the above-described data;

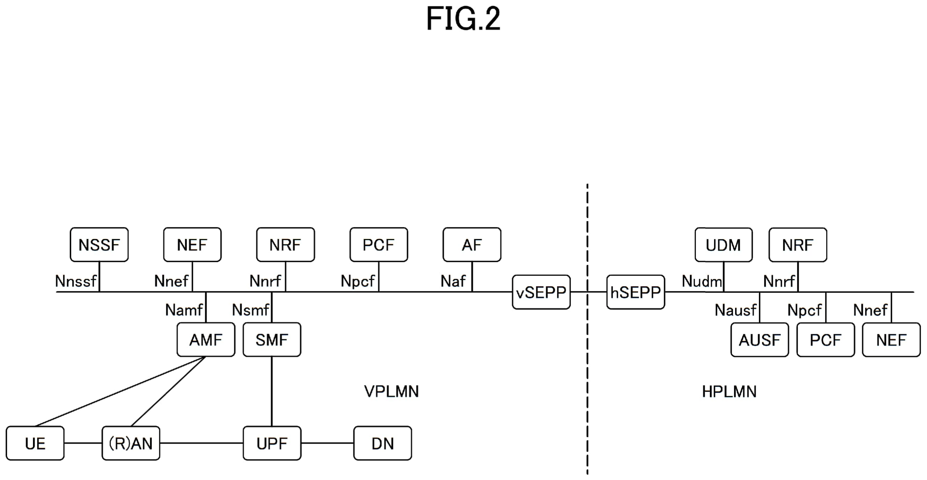

Fig. 2 is a drawing illustrating an example of a communication system under a roaming environment. As illustrated in Fig. 2, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF, and UPF. AMF is a network node 30 having functions of terminating the RAN interface, terminating NAS, managing registration, managing connection, managing reachability, managing mobility, and the like. UPF is a network node 30 having functions of PDU session point to an external unit mutually connected to DN, routing and forwarding of packets, QoS handling of the user plane, and the like. UPF and DN are included in a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

SMF is a network node 30 having functions such as session management, IP address assignment and management for UE, a DHCP function, an ARP proxy, and a roaming function. NEF is a network node 30 having a function of indicating capabilities and events to other NFs. NSSF is a network node 30 having functions of selecting the network slice to which the UE is to be connected, determining NSSAI to be allowed, determining NSSAI to be configured, determining AMF set to which the UE is to be connected, and the like. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 2 is a SEPP in a visited network, and hSEPP is a SEPP in a home network.

As shown in Fig. 2, the UE is in a roaming environment connected to RAN and AMF in VPLMN (Visited PLMN). VPLMN and HPLMN (Home PLMN) are connected to each other via vSEPP and hSEPP. The UE can communicate with the UDM of HPLMN via the AMF of VPLMN, for example.

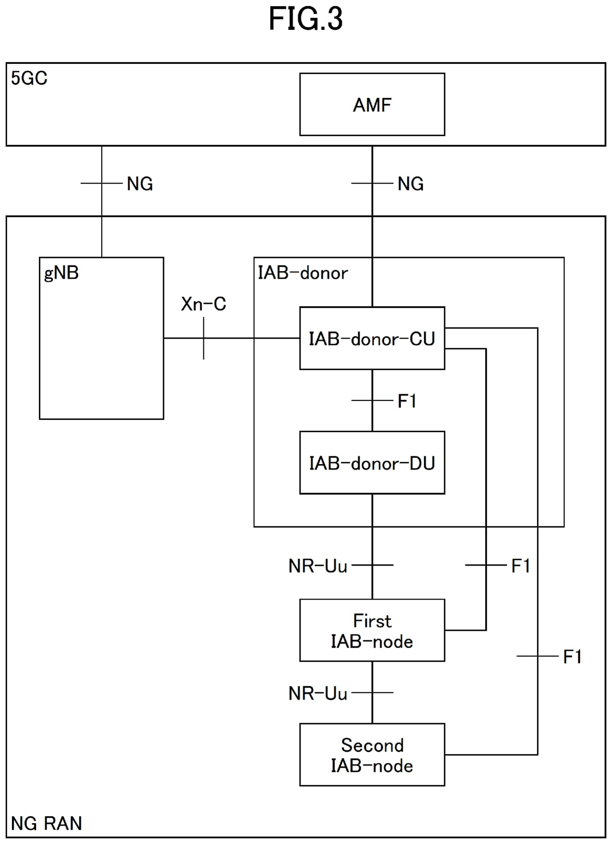

Fig. 3 is a drawing for describing IAB (Integrated Access Backhaul) in an embodiment of the present invention. As illustrated in Fig. 3, in NG-RAN, IAB is supported by an IAB-node that is wirelessly connected to a gNB (referred to as an IAB-donor) that provides IAB-nodes. The IAB-donor consists of an IAB-donor-CU (Central Unit) and at least one IAB-donor-DU (Distributed Unit). The IAB-node is connected to, as illustrated by the first IAB-node, an IAB-donor-DU via a subset of a terminal function of the NR-Uu interface (referred to as an IAB-MT (Mobile Termination) function of an IAB-node), or is connected to, as illustrated by the second IAB-node, an upstream IAB-node. In addition, the interface establishment is performed (F1 setup) between a lower layer wireless base station function of an IAB-node and an IAB-donor-CU. It is to be noted that the IAB-donor-CU, the IAB-donor-DU, the first IAB-node, and the second IAB-node may be referred to as network nodes 30.

### (Embodiment 1)

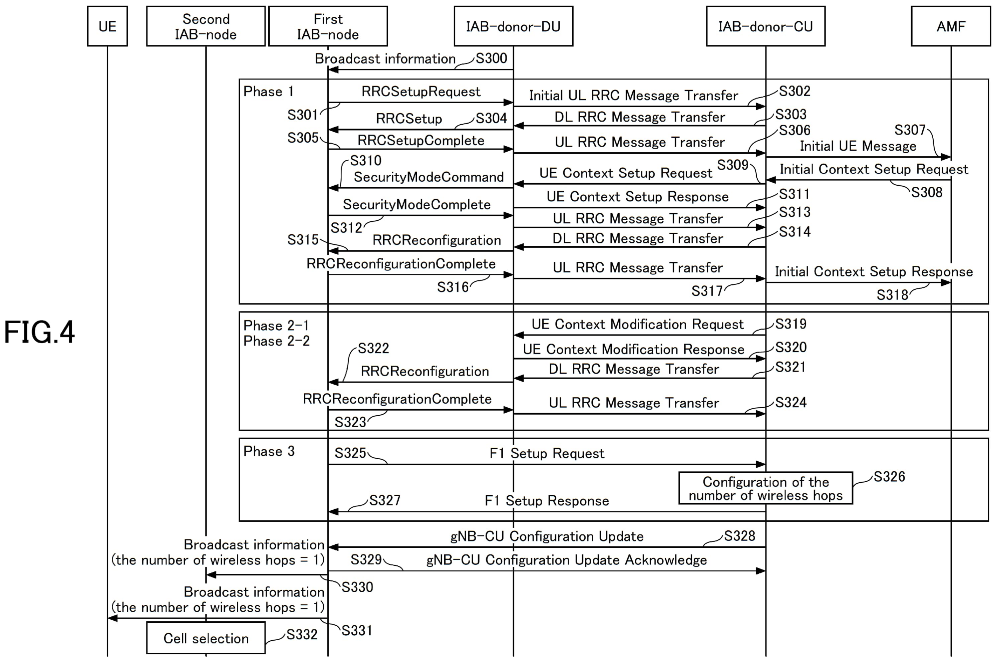

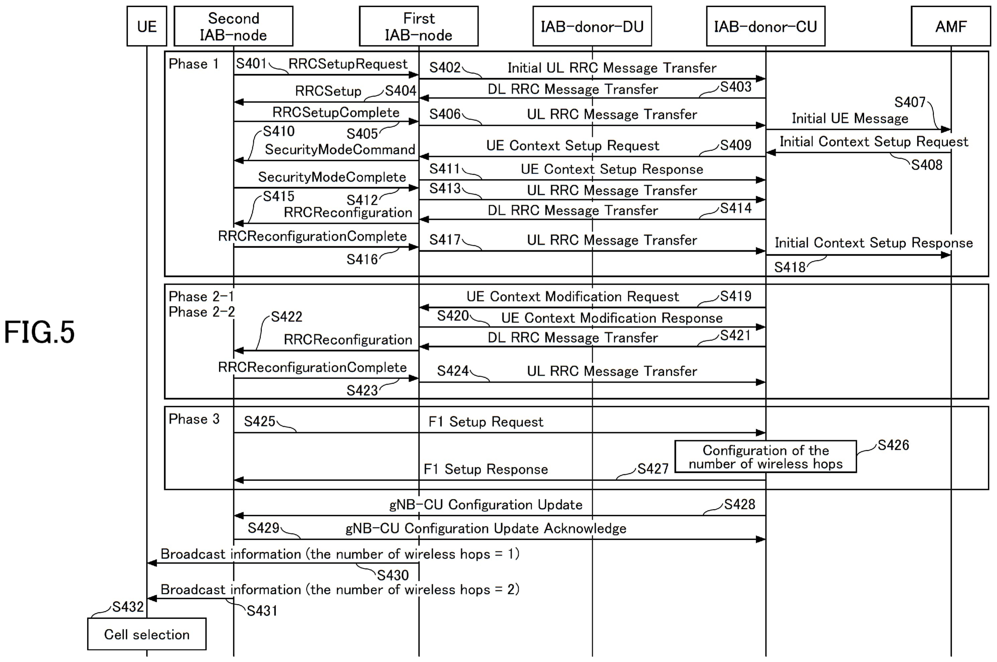

Embodiment 1 will be described. In Embodiment 1, a procedure for configuring a route in which the number of wireless hops in the wireless backhaul is taken into account will be described. Fig. 4 and Fig. 5 are drawings illustrating examples of the first and second sequence diagrams in an embodiment of the present invention. In the first and second sequence diagrams, in processing related to each of the first IAB-node and the second IAB-node, IAB-MT setup (IAB-MT configuration) is performed in phase 1, BH (Backhaul) RLC (Radio Link Control) channel establishment is performed in phase 2-1, Routing update is performed in phase 2-2, and IAB-DU setup is performed in phase 3. The overall summary including the above-described phases can be found in clause 8.12.1 in Non-Patent Literature 2. In addition, the details of phase 1, phase 2-1, and phase 2-2 can be respectively found in clause 8.1, clause 8.9.8, and clause 8.9.9.1 in Non-Patent Literature 2, and the details of phase 3 can be found in clause 8.2.3.2 in Non-Patent Literature 3.

The connection between an IAB-donor-CU and an IAB-donor-DU is a wired connection, and the number of wireless hops is 0. On the other hand, the connection between an IAB-donor-DU and an IAB-node, the connection between an IAB-node and an IAB-node, and the connection between a terminal 20 and an IAB-node are wireless connections, and thus, with respect to each of the above-described connections, the number of wireless hops is 1. Here, with respect to the number of wireless hops configured for each IAB-node, a value obtained by accumulating all of the wirelessly connected IAB-nodes included in a route between the IAB-donor-DU and the IAB-node itself (the target IAB-node) is configured. Based on the configured number of wireless hops, a route with the smallest number of wireless hops is to be selected among the routes between the terminal 20 and the IAB-donor-CU.

For example, in a case where a first IAB-node is connected to the IAB-donor-DU, the number of wireless hops to be configured for the first IAB-node is 1. In addition, in a case where the second IAB-node is connected to the first IAB-node, and is connected to the IAB-donor-CU via the first IAB-node, the number of wireless hops to be configured for the second IAB-node is 2. In the route selection between the terminal 20 and the IAB-donor-CU, the first IAB-node whose total number of wireless hops is smaller is to be selected among the first IAB-node and the second IAB-node that are connection destination of the terminal 20, based on the configured number of wireless hops as described above.

It is to be noted that the request, response, indication, and the like transmitted and received between network nodes may be referred to as, for example, a message or information, and may be referred to as a request message or request information, for example. In addition, the route between a terminal and a network node, for example, may be referred to as a communication route. Hereinafter, processing of each of the steps in Fig. 4 will be described.

Step S300: The IAB-donor-DU transmits broadcast information to the first IAB node.

Step S301: The first IAB-node transmits, to the IAB-donor-DU, RRCSetupRequest that is a message for establishing connection for each terminal (terminal-specific connection establishment request). Here, the terminal that performs requesting is a first IAB-MT that is an MT (Mobile Termination) function of the first IAB-node.

Step S302: The IAB-donor-DU transmits Initial UL RRC Message Transfer to the IAB-donor-CU. The above-described message includes RRCSetupRequest.

Step S303: The IAB-donor-CU transmits DL RRC Message Transfer including RRCSetup to the IAB-donor-DU.

Step S304: The IAB-donor-DU transmits RRCSetup included in the received DL RRC Message Transfer to the first IAB-node.

Step S305: The first IAB-node transmits RRCSetupComplete indicating completion of RRC configuration to the IAB-donor-DU. The RRCSetupComplete includes information indicating the IAB-node (iab-NodeIndication).

Step S306: The IAB-donor-DU transmits UL RRC Message Transfer to the IAB-donor-CU. The above-described message includes RRCSetupComplete. The RRCSetupComplete includes information indicating the IAB-node (iab-NodeIndication).

Step S307: The IAB-donor-CU transmits Initial UE Message to the AMF. The above-described message includes information indicating the IAB-node (IAB Node Indication).

Step S308: The AMF transmits Initial Context Setup Request to the IAB-donor-CU. The above-described message includes information indicating that the IAB node is authorized (IAB Authorized).

Step S309: The IAB-donor-CU transmits, to the IAB-donor-DU, UE Context Setup Request that is a message for requesting the UE context configuration. The above-described message includes SecurityModeCommand.

Step S310: The IAB-donor-DU transmits SecurityModeCommand included in the received UE Context Setup Request to the first IAB-node.

Step S311: The IAB-donor-DU transmits, to the IAB-donor-CU, UE Context Setup Response that is a response to the request received in step S309.

Step S312: The first IAB-node transmits SecurityModeComplete indicating completion of security configuration to the IAB-donor-DU.

Step S313: The IAB-donor-DU transmits UL RRC Message Transfer to the IAB-donor-CU. The above-described message includes SecurityModeComplete.

Step S314: The IAB-donor-CU transmits DL RRC Message Transfer to the IAB-donor-DU. The above-described message includes RRCReconfiguration.

Step S315: The IAB-donor-DU transmits RRCReconfiguration included in the received DL RRC Message Transfer to the first IAB-node.

Step S316: The first IAB-node transmits RRCReconfigurationComplete indicating completion of RRCReconfiguration to the IAB-donor-DU.

Step S317: The IAB-donor-DU transmits UL RRC Message Transfer to the IAB-donor-CU. The above-described message includes RRCReconfigurationComplete.

Step S318: The IAB-donor-CU transmits, to the AMF, Initial Context Setup Response that is a response to the request received in step S308.

Step S319: The IAB-donor-CU transmits, to the IAB-donor-DU, UE Context Modification Request in order to establish a new backhaul radio link control channel. The above-described message may be referred to as UE Context Modification Request (BH RLC Channel to be Setup List (Traffic Mapping Information), Configured BAP Address). Here, the Configured BAP (Backhaul Adaptation Protocol) Address is an address of the first IAB-node on the backhaul to be newly configured here, and may be configured to be "abc", for example.

Step S320: The IAB-donor-DU transmits, to the IAB-donor-CU, UE Context Modification Response as a response to the request received in step S319.

Step S321: The IAB-donor-CU transmits DL RRC Message Transfer to the IAB-donor-DU. The above-described message includes RRCReconfiguration, and may be referred to as DL RRC Message Transfer (RRC-Container (RRCReconfiguration (bap-Config (bap-Address=abc, defaultUL-BAP-RoutingID, defaultUL-BH-RLC-Channel, iab-IP-AddressConfigurationList)))). The RRCReconfiguration includes information for establishing a new backhaul radio link control channel (bap (backhaul adaptation protocol) - Config). The "bap-Address=abc" means that the address of the first IAB-node on the backhaul to be newly configured here is abc.

Step S322: The IAB-donor-DU transmits RRCReconfiguration included in the received DL RRC Message Transfer to the first IAB-node. The above-described message may be referred to as RRCReconfiguration (bap-Config (bap-Address=abc, defaultUL-BAP-RoutingID, defaultUL-BH-RLC-Channel, iab-IP-AddressConfigurationList)).

Step S323: The first IAB-node transmits RRCReconfigurationComplete indicating completion of RRCReconfiguration to the IAB-donor-DU.

Step S324: The IAB-donor-DU transmits UL RRC Message Transfer to the IAB-donor-CU. The above-described message includes RRCReconfigurationComplete.

Step S325: The first IAB-node transmits F1 Setup Request to the IAB-donor-CU. The above-described message includes information indicating that the identifier of gNB DU is 123 (gNB DU ID=123) and the backhaul protocol address is abc (BAP address=abc).

Step S326: The IAB-donor-CU recognizes that the gNB DU is an IAB-node because the BAP address is configured in the message received in step S325. Furthermore, the IAB-donor-CU configures the number of wireless hops of the first IAB-node as 1 because "BAP address=abc" is a value allocated to the terminal (first IAB-MT) connected to the IAB-donor-DU whose number of wireless hops is 0. Furthermore, the IAB-donor-CU configures the number of wireless hops of the IAB-node corresponding to the "gNB DU ID=123" as 1.

Step S327: The IAB-donor-CU transmits, to the first IAB-node, F1 Setup Response as a response to the request received in step S325. By performing the above-described operation, the connection between the IAB-donor-CU and the first IAB-node is completed and they have been connected.

Step S328: The IAB-donor-CU transmits gNB-CU Configuration Update to the first IAB-node. The details of the above-described message in the current technical specification can be found in clause 8.2.5 in Non-Patent Literature 3. Furthermore, the above-described message includes information indicating that the configuration related to the first IAB-node is updated in which the number of wireless hops is updated to 1. The above-described message may be referred to as gNB-CU Configuration Update (Cells to be Activated List (Cells to be Activated List Item (gNB-CU System Information (SIB type to Be Updated List (broadcasting that the number of wireless hops=1 via SIBx))))).

Step S329: The first IAB-node transmits, to the IAB-donor-CU, gNB-CU Configuration Update Acknowledge as a response to the message received in step S328.

Step S330: The first IAB-node broadcasts, to the second IAB-node (second IAB-MT), broadcast information including information indicating that the number of wireless hops of the first IAB-node is 1. In other words, the second IAB-node (second IAB-MT) receives the broadcast information from a cell corresponding to the first IAB-node.

Step S331: The first IAB-node transmits, to the UE (terminal 20), broadcast information including information indicating that the number of wireless hops of the first IAB-node is 1. In other words, the UE (terminal 20) receives the broadcast information from a cell corresponding to the first IAB-node.

Step S332: The second IAB-node (second IAB-MT) (re)selects a cell that has the smallest number of wireless hops, here, a cell corresponding to the first IAB-node (it is to be noted that there is no choice other than the first IAB-node) in the cell selection.

Next, processing of each step illustrated in Fig. 5 will be described.

Step S401: The second IAB-node transmits, to the first IAB-node, RRCSetupRequest that is a message for establishing connection for each terminal (terminal-specific connection establishment request). Here, the terminal that performs requesting is a second IAB-MT that is an MT (Mobile Termination) function of the second IAB-node.

Step S402: The first IAB-node transmits Initial UL RRC Message Transfer to the IAB-donor-CU. The above-described message includes RRCSetupRequest. The IAB-donor-CU recognizes that the above-described message is a message from "gNB DU ID=123", that is, a message transmitted by the first IAB-node whose number of wireless hops is 1. The IAB-donor-CU stores a value of 2 that is obtained by adding 1 that is the number of wireless hops between the first IAB-node and the second IAB-MT to a value of 1 that is the number of wireless hops of the first IAB-node.

Step S403: The IAB-donor-CU transmits DL RRC Message Transfer including RRCSetup to the first IAB-node.

Step S404: The first IAB-node transmits RRCSetup included in the received DL RRC Message Transfer to the second IAB-node.

Step S405: The second IAB-node transmits RRCSetupComplete indicating completion of RRC configuration to the first IAB-node. The RRCSetupComplete includes information indicating the IAB-node (iab-NodeIndication).

Step S406: The first IAB-node transmits UL RRC Message Transfer to the IAB-donor-CU. The above-described message includes RRCSetupComplete. The RRCSetupComplete includes information indicating the IAB-node (iab-NodeIndication).

Step S407: The IAB-donor-CU transmits Initial UE Message to the AMF. The above-described message includes information indicating the IAB-node (IAB Node Indication).

Step S408: The AMF transmits Initial Context Setup Request to the IAB-donor-CU. The above-described message includes information indicating that the IAB node is authorized (IAB Authorized).

Step S409: The IAB-donor-CU transmits, to the first IAB-node, UE Context Setup Request that is a message for requesting the UE context configuration. The above-described message includes SecurityModeCommand.

Step S410: The first IAB-node transmits SecurityModeCommand included in the received UE Context Setup Request to the second IAB-node.

Step S411: The first IAB-node transmits, to the IAB-donor-CU, UE Context Setup Response that is a response to the request received in step S409.

Step S412: The second IAB-node transmits SecurityModeComplete indicating completion of security configuration to the first IAB-node.

Step S413: The first IAB-node transmits UL RRC Message Transfer to the IAB-donor-CU. The above-described message includes SecurityModeComplete.

Step S414: The IAB-donor-CU transmits DL RRC Message Transfer to the first IAB-node. The above-described message includes RRCReconfiguration.

Step S415: The first IAB-node transmits RRCReconfiguration included in the received DL RRC Message Transfer to the second IAB-node.

Step S416: The second IAB-node transmits RRCReconfigurationComplete indicating completion of RRCReconfiguration to the first IAB-node.

Step S417: The first IAB-node transmits UL RRC Message Transfer to the IAB-donor-CU. The above-described message includes RRCReconfigurationComplete.

Step S418: The IAB-donor-CU transmits, to the AMF, Initial Context Setup Response that is a response to the request received in step S408.

Step S419: The IAB-donor-CU transmits, to the first IAB-node, UE Context Modification Request in order to establish a new backhaul radio link control channel. The above-described message may be referred to as UE Context Modification Request (BH RLC Channel to be Setup List (Traffic Mapping Information), Configured BAP Address). Here, the Configured BAP (Backhaul Adaptation Protocol) Address is an address of the second IAB-node on the backhaul to be newly configured here, and may be configured to be "def", for example.

Step S420: The first IAB-node transmits, to the IAB-donor-CU, UE Context Modification Response that is a response to the request received in step S419.

Step S421: The IAB-donor-CU transmits DL RRC Message Transfer to the first IAB-node. The above-described message includes RRCReconfiguration, and may be referred to as DL RRC Message Transfer (RRC-Container (RRCReconfiguration (bap-Config (bap-Address=def, defaultUL-BAP-RoutingID, defaultUL-BH-RLC-Channel, iab-IP-AddressConfigurationList)))). The RRCReconfiguration includes information for establishing a new backhaul radio link control channel (bap (backhaul adaptation protocol) - Config). The "bap-Address=def" means that the address of the second IAB-node on the backhaul to be newly configured here is def.

Step S422: The first IAB-node transmits RRCReconfiguration included in the received DL RRC Message Transfer to the second IAB-node. The above-described message may be referred to as RRCReconfiguration (bap-Config (bap-Address=def, defaultUL-BAP-RoutingID, defaultUL-BH-RLC-Channel, iab-IP-AddressConfigurationList)).

Step S423: The second IAB-node transmits RRCReconfigurationComplete indicating completion of RRCReconfiguration to the first IAB-node.

Step S424: The first IAB-node transmits UL RRC Message Transfer to the IAB-donor-CU. The above-described message includes RRCReconfigurationComplete.

Step S425: The second IAB-node transmits F1 Setup Request to the IAB-donor-CU. The above-described message includes information indicating that the identifier of gNB DU is 456 (gNB DU ID=456) and the backhaul protocol address is def (BAP address=def).

Step S426: The IAB-donor-CU recognizes that the gNB DU is an IAB-node because the BAP address is configured in the message received in step S425. Furthermore, the IAB-donor-CU determines that the IAB-node recognized as gNB DU and the second IAB-MT are the same network node because "BAP address=def" is a value allocated to the terminal (second IAB-MT) connected to the first IAB-node whose number of wireless hops is 1, and configures the number of wireless hops of the second IAB-node as 2 (the value stored in step S402). Furthermore, the IAB-donor-CU configures the number of wireless hops of the IAB-node corresponding to the "gNB DU ID=456" as 2.

Step S427: The IAB-donor-CU transmits, to the second IAB-node, F1 Setup Response as a response to the request received in step S425. By performing the above-described operation, the connection between the IAB-donor-CU and the second IAB-node is completed and they have been connected.

Step S428: The IAB-donor-CU transmits gNB-CU Configuration Update to the second IAB-node. The details of the above-described message in the current technical specification can be found in clause 8.2.5 in Non-Patent Literature 3. Furthermore, the above-described message includes information indicating that the configuration related to the second IAB-node is updated in which the number of wireless hops is updated to 2. The above-described message may be referred to as gNB-CU Configuration Update (Cells to be Activated List (Cells to be Activated List Item (gNB-CU System Information (SIB type to Be Updated List (broadcasting that the number of wireless hops=2 via SIBx))))).

Step S429: The second IAB-node transmits, to the IAB-donor-CU, gNB-CU Configuration Update Acknowledge as a response to the message received in step S428.

Step S430: The first IAB-node transmits, to the UE (terminal 20), broadcast information including information indicating that the number of wireless hops of the first IAB-node is 1. In other words, the UE (terminal 20) receives the broadcast information from a cell corresponding to the first IAB-node.

Step S431: The second IAB-node transmits, to the UE (terminal 20), broadcast information including information indicating that the number of wireless hops of the second IAB-node is 2. In other words, the UE (terminal 20) receives the broadcast information from a cell corresponding to the second IAB-node.

Step S432: The UE (terminal 20) (re)selects a cell corresponding to the first IAB-node whose number of wireless hops is the smallest in cell selection. In other words, the UE (terminal 20) compares the first IAB-node whose number of wireless hops is 1 with the second IAB-node whose number of wireless hops is 2 and selects a cell corresponding to the first IAB-node whose number of wireless hops is the smallest.

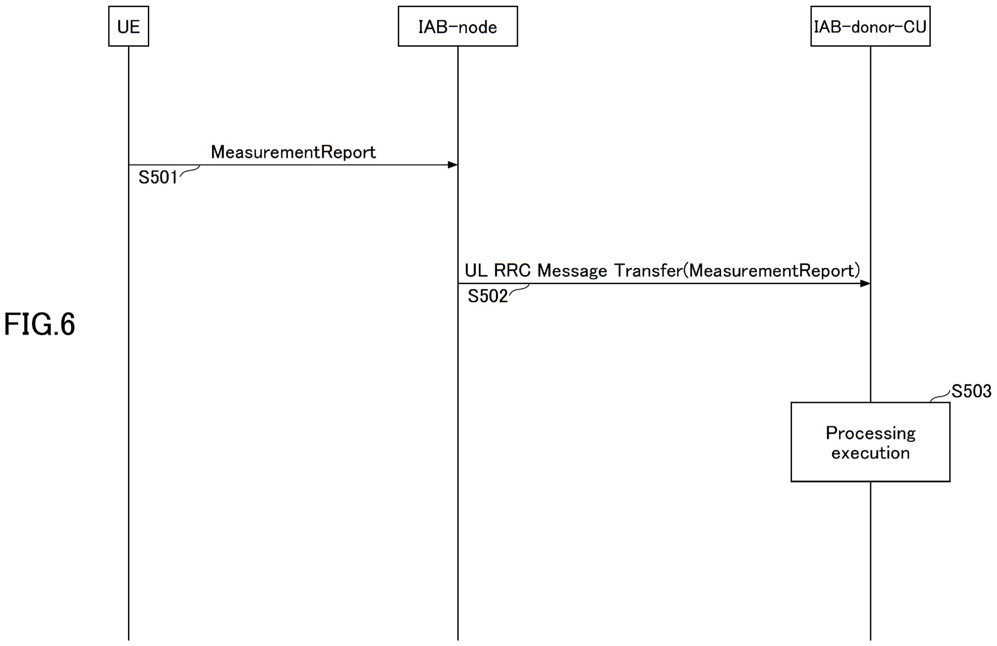

Next, a procedure of Measurement Report transmission by the UE (terminal 20) will be described. Fig. 6 is a drawing illustrating an example of a third sequence diagram in an embodiment of the present invention. Hereinafter, processing of each of the steps in Fig. 6 will be described.

In step S501, the UE (terminal 20) transmits MeasurementReport to the IAB-node. The conventional technical specification of MeasurementReport can be found in clause 6.2.2 in Non-Patent Literature 4. MeasurementReport includes an information element (IE) of measurementreport. The information element, measurementReport, includes an information element, measResults. The information element, measResults, includes an information element, measResultServingMOList (can be found in clause 6.3.2 in Non-Patent Literature 4). The information element, measResultServingMOList, includes an information element, measResultListNR. The information element, measResultListNR, includes a newly defined information element, iab-hop-number. The iab-hop-number indicates the number of wireless hops of the selected cell. The information element, measResults, further includes an information element, measResultNeighCells (can be found in clause 6.3.2 in Non-Patent Literature 4). The information element, measResultNeighCells, includes an information element, measResultListNR. The information element, measResultListNR, includes a newly defined information element, iab-hop-number. The iab-hop-number indicates the number of wireless hops for each of the neighbor cells. The UE (terminal 20) determines information to be iab-hop-number, the information being information in which the number of wireless hops included in the broadcast information received in, for example, step S331 in Fig. 4 or steps S430 and S431 in Fig. 5 is associated with a cell corresponding to the IAB-node that is the transmission source of the broadcast information.

It is to be noted that the UE (terminal 20) may be an IAB-MT that is a terminal function of an IAB-node. In other words, an IAB-MT in an IAB-node may transmit MeasurementReport to another IAB-node.

Step S502: The IAB-node transmits UL RRC Message Transfer (can be found in clause 5.2.3.3 in Non-Patent Literature 3) to the IAB-donor-CU. The above-described message includes an information element, RRC-Container. The information element, RRC-Container, includes MeasurementReport. In other words, the IAB-node-DU transmits the received MeasurementReport by including it in UL RRC Message Transfer.

Step S503: The IAB-donor-CU obtains the value of iab-hop-number included in the received message, UL RRC Message Transfer. Based on the obtained value of iab-hop-number, the IAB-donor-CU performs a procedure of intra-IAB-donor-CU topology adaptation (can be found in clause 8.2.3.1 in Non-Patent Literature 2), a procedure of inter-IAB-donor-CU topology adaptation (can be found in clause 8.17.3 in Non-Patent Literature 2), a procedure of intra-CU HO (Handover), a procedure of determining the necessity of initiating the inter-CU terminal HO procedure, and a procedure of handover destination selection. In other words, the IAB-donor-CU can perform configuring a route whose number of wireless hops is the smallest, based on the number of wireless hops included in iab-hop-number, in each of the above-described procedures.

According to an embodiment of the present invention, a procedure for configuring a route obtained by taking into account the number of wireless hops in the wireless backhaul can be specified. In other words, it is possible to specify procedures for performing: cell selection based on the number of wireless hops at the time of network connection; IAB topology adaptation, determination of initiating the handover procedure, and determination of the handover destination. Furthermore, wireless resources can be effectively used by configuring a route in which the number of wireless hops in the wireless backhaul is minimized.

### (Device configuration)

Next, a functional configuration example of the base station 10, network node 30 and the terminal 20 that perform processes and operations described above will be described. The base station 10, the network node 30 and the terminal 20 include functions for implementing the embodiments described above. It should be noted, however, that each of the base station 10, the network node 30 and the terminal 20 may include only some of the functions in the embodiments.

### <Base station 10 and network node 30>

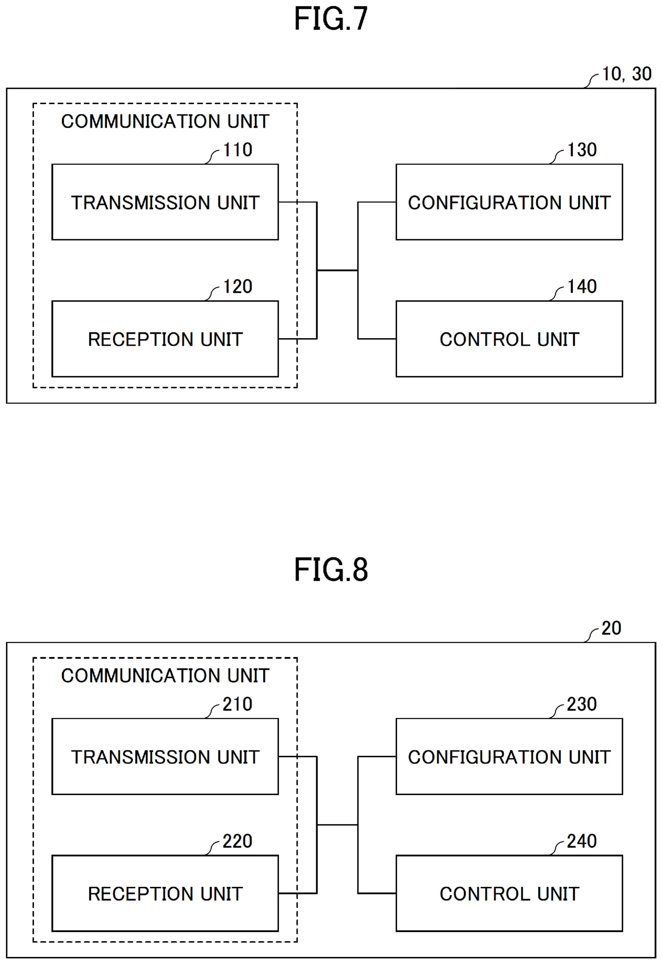

Fig. 7 is a drawing illustrating an example of a functional configuration of the base station 10 and the network node 30. As shown in Fig. 7, the base station 10 includes a transmission unit 110, a reception unit 120, a configuration unit 130, and a control unit 140. The functional configuration illustrated in Fig. 7 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals. A communication unit including the transmission unit 110 and the reception unit 120 may be configured.

The configuration unit 130 stores preset configuration information and various configuration information items to be transmitted to the terminal 20 in a storage apparatus and reads the preset configuration information from the storage apparatus as necessary. Contents of the configuration information are, for example, information related to a communication route in the wireless backhaul.

The control unit 140 performs control related to the wireless backhaul as described in the embodiments. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 8 is a diagram illustrating an example of a functional configuration of the terminal 20. As shown in Fig. 8, the terminal 20 includes a transmission unit 210, a reception unit 220, a configuration unit 230, and a control unit 240. The functional configuration illustrated in Fig. 8 is merely an example. Functional divisions and names of functional units may be anything as long as operations according to an embodiment of the present invention can be performed. In addition, the communication apparatus that is a resource holder 20 may have a functional configuration similar to the terminal 20.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving control signals or reference signals, and the like, transmitted from the network node 30. A communication unit including the transmission unit 210 and the reception unit 220 may be configured.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, information related to a communication route in the wireless backhaul.

The control unit 240 performs control related to the communication route in the wireless backhaul as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 7 and Fig. 8) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

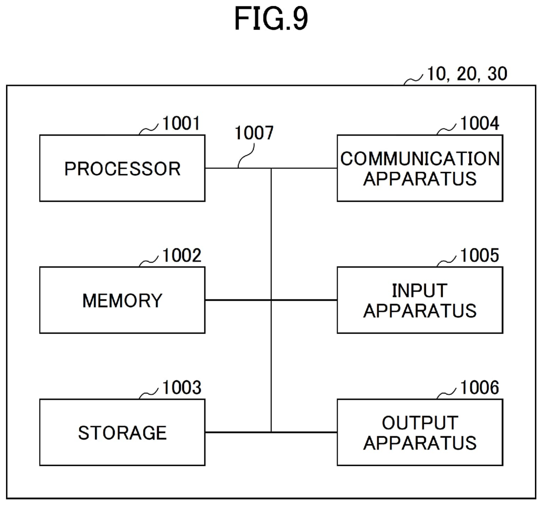

For example, the base station 10, the network node 30, terminal 20, etc., according to an embodiment of the present disclosure may function as a computer for processing the radio communication method of the present disclosure. Fig. 9 is a diagram to show an example of a hardware structure of the base station 10 and the terminal 20 according to one embodiment. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 7 may be implemented by control programs that are stored in the memory 1002 and that operate on the processor 1001. In addition, for example, the control unit 240 of the terminal 20 illustrated in Fig. 8 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

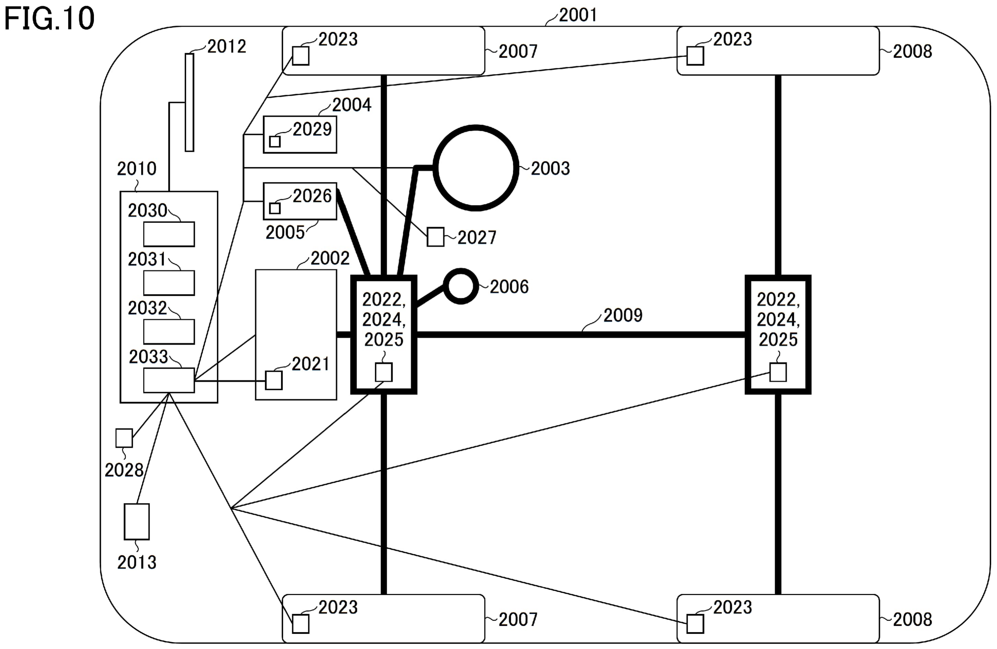

Fig. 10 shows an example of a configuration of a vehicle 2001. As shown in Fig. 10, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a network node is provided. The network node includes: a control unit configured to configure a first configuration value indicating a number of wireless hops between the network node itself and a first network node that has already been connected to the network node itself; and a reception unit configured to receive a connection request from a terminal or a terminal function included in a second network node via the first network node and to receive an interface establishment request from a lower layer wireless base station function included in a third network node. The control unit stores a value obtained by adding one to the first configuration value in response to reception of the connection request from the terminal function included in the second network node, and configures the stored value as a second configuration value indicating a number of wireless hops between the network node itself and the third network node in a case where both the interface establishment is received from the lower layer wireless base station function included in the third network node and the third network node is determined to be same as the second network node.

According to the above-described configuration, a procedure for configuring a route obtained by taking into account the number of wireless hops in the wireless backhaul can be specified.

The control unit may configure the number of wireless hops between the network node itself and a network node that is connected in a wired manner as 0.

According to the above-described configuration, a procedure for configuring a route obtained by taking into account the number of wireless hops in the wireless backhaul can be specified.

A transmission unit configured to transmit the number of wireless hops with the network node itself to the network node that has already been connected to the network node itself may be further included.

According to the above-described configuration, a procedure for configuring a route obtained by taking into account the number of wireless hops in the wireless backhaul can be specified.

The reception unit may receive, from a terminal or a terminal function included in another network node, a measurement report including the number of wireless hops included in broadcast information transmitted by the network node that has already been connected to the network node itself, and the control unit may perform: IAB (Integrated Access Backhaul) topology adaptation; determination of initiating the handover procedure; and determination of the handover destination of the terminal or a terminal function included in the another network node.

According to the above-described configuration, a procedure for configuring a route obtained by taking into account the number of wireless hops in the wireless backhaul can be specified.

In addition, according to an embodiment of the present invention, a network node is provided. The network node includes: a reception unit configured to receive a number of wireless hops configured by an IAB (Integrated Access Backhaul) - donor for the network node itself; and a transmission unit configured to transmit broadcast information including the number of wireless hops.

According to the above-described configuration, a procedure for configuring a route obtained by taking into account the number of wireless hops in the wireless backhaul can be specified.

In addition, according to an embodiment of the present invention, a network node is provided. The network node includes: a reception unit configured to receive, from each of neighbor cells, broadcast information including a number of wireless hops; a control unit configured to select a cell corresponding to broadcast information including a smallest number of wireless hops from among the neighbor cells; and a transmission unit configured to transmit a measurement report including the number of wireless hops of the selected cell and the number of wireless hops of each of the neighbor cells after establishing the connection with the selected cell.

According to the above-described configuration, a procedure for configuring a route obtained by taking into account the number of wireless hops in the wireless backhaul can be specified.

In addition, according to an embodiment of the present invention, a terminal is provided. The terminal includes: a reception unit configured to receive, from each of neighbor cells, broadcast information including a number of wireless hops; a control unit configured to select a cell corresponding to broadcast information including a smallest number of wireless hops from among the neighbor cells; and a transmission unit configured to transmit a measurement report including the number of wireless hops of the selected cell and the number of wireless hops of each of the neighbor cells after establishing the connection with the selected cell.

According to the above-described configuration, a procedure for configuring a route obtained by taking into account the number of wireless hops in the wireless backhaul can be specified.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a forklift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A network node comprising:
a control unit configured to configure a first configuration value indicating a number of wireless hops between the network node itself and a first network node that has already been connected to the network node itself; and
a reception unit configured to receive a connection request from a terminal or a terminal function included in a second network node via the first network node or receives an interface establishment request from a lower layer wireless base station function included in a third network node, wherein
the control unit stores a value obtained by adding one to the first configuration value in response to reception of the connection request from the terminal function included in the second network node, and configures the stored value as a second configuration value indicating a number of wireless hops between the network node itself and the third network node in a case where both the interface establishment is received from the lower layer wireless base station function included in the third network node and the third network node is determined to be same as the second network node.

2. The network node as claimed in claim 1, wherein
the control unit configures the number of wireless hops between the network node itself and a network node that is connected in a wired manner as 0.

3. The network node as claimed in claim 1, the network node further comprising:
a transmission unit configured to transmit the number of wireless hops with the network node itself to the network node that has already been connected to the network node itself.

4. The network node as claimed in claim 1, wherein
the reception unit receives, from a terminal or a terminal function included in another network node, a measurement report including the number of wireless hops included in broadcast information transmitted by the network node that has already been connected to the network node itself, and
the control unit performs: IAB (Integrated Access Backhaul) topology adaptation; determination of initiating the handover procedure; and determination of the handover destination of the terminal or a terminal function included in the another network node, based on the number of wireless hops included in the measurement report.

5. A network node comprising:
a reception unit configured to receive a number of wireless hops that is configured for the network node itself by an IAB (Integrated Access Backhaul) - donor; and
a transmission unit configured to transmit broadcast information including the number of wireless hops.

6. A network node comprising:
a reception unit configured to receive, from each of neighbor cells, broadcast information including a number of wireless hops;
a control unit configured to select a cell corresponding to broadcast information including a smallest number of wireless hops from among the neighbor cells; and
a transmission unit configured to transmit a measurement report including the number of wireless hops of the selected cell and the number of wireless hops of each of the neighbor cells after establishing the connection with the selected cell.

7. A terminal comprising:
a reception unit configured to receive, from each of neighbor cells, broadcast information including a number of wireless hops;
a control unit configured to select a cell corresponding to broadcast information including a smallest number of wireless hops from among the neighbor cells; and
a transmission unit configured to transmit a measurement report including the number of wireless hops of the selected cell and the number of wireless hops of each of the neighbor cells after establishing the connection with the selected cell.
